# EUROPÄISCHE PATENTSCHRIFT

(11) **EP 2 863 114 B1**
(45) Veröffentlichungstag und Bekanntmachung des Hinweises auf die Patenterteilung: **26.04.2017**
(21) Anmeldenummer: 13004955.4
(22) Anmeldetag: 16.10.2013
(51) Int. Cl.: F21V 8/00

(54) **LED-Flächenleuchte**
LED area light
Lampe de surface à DEL

(43) Veröffentlichungstag der Anmeldung: 22.04.2015
(73) Patentinhaber: Bega Gantenbrink-Leuchten KG, 58708 Menden (DE)
(72) Erfinder: Fobbe, Klaus, 58708 Menden (DE)
(74) Vertreter: Grünecker Patent- und Rechtsanwälte PartG mbB

(56) Entgegenhaltungen:
- WO-A1-03/083529
- US-A1- 2010 254 121
- US-A1- 2013 027 916

## Beschreibung

Die vorliegende Erfindung betrifft eine LED-Flächenleuchte nach dem Oberbegriff des unabhängigen Anspruchs 1.

Aus dem Stand der Technik sind LED-Flächenleuchten bekannt, bei welchen zusätzliche Maßnahmen ergriffen werden, um die Schichten des Schichtaufbaus und die LEDs vor Staub oder Luftfeuchtigkeit zu schützen. Üblicherweise besteht der Schichtaufbau aus einer Reflektorschicht, einem Abdeckglas und einer dazwischen angeordneten Lichtleitschicht, die das Licht der am Rand des Schichtaufbaus angeordneten LEDs gleichmäßig über die gesamte Fläche verteilt. Die Schichten des Schichtaufbaus können beispielsweise miteinander verklebt werden. Auch ist es möglich, die LEDs mit dem Schichtaufbau zu verkleben. Es ist auch bekannt, zusätzliche Dichtungen zu verwenden, um den Schichtaufbau abzudichten. Daneben sind auch LED-Flächenleuchten bekannt, deren Schichtaufbau nicht zusätzlich abgedichtet ist. Bei diesen Leuchten setzten sich mit der Zeit Schmutz und/oder Kondenswasser zwischen den einzelnen Schichten ab, wodurch Lichtleistung und Wirkungsgrad der Leuchte sinken.

Aus DE 103 15 251 B4 ist eine LED-Flächenleuchte bekannt. Bei dieser Leuchte wird ein Dichtrahmen verwendet, der einen optischen Schichtaufbau entlang seiner Schmalseiten vollständig umgibt. Der Aufbau besteht aus einem Grundteil, einem Lichtleiter und einer lichtdurchlässigen Abdeckung. Um den Aufbau abzudichten, besteht der Dichtrahmen in einer Ausführungsform aus einem Heißklebekunststoff, der Grundteil und Abdeckung dauerhaft miteinander verklebt.

Nachteilig bei der aus der DE 103 15 251 B4 bekannten Leuchte ist, dass bei der Verwendung eines Heißklebekunststoffs ein Austausch von defekten Bauteilen, beispielsweise der LEDs, unmöglich ist. Ein Gehäuserahmen, in den der Aufbau eingesetzt und der über eine zweite Dichtung abgedichtet wird, ist nicht beschrieben.

Eine Beleuchtungsvorrichtung für Scheiben an Fahrzeugen ist aus US 2011/0267833 A1 bekannt. Hier werden Leuchtdioden verwendet, um eine Fahrzeugscheibe seitlich zu beleuchten. Der optische Schichtaufbau besteht dabei aus einer oder mehreren durchsichtigen Scheiben, die miteinander verklebt sind um ein Splitern zu verhindern. LEDs sind seitlich als Leuchtmittel angebracht und werden von einer Dichtung umklammert. Die Dichtung besteht aus einem U-förmigen Metallprofil, welches mit Gummi beschichtet ist.

Zusätzlich ist der Bereich innerhalb der Dichtung, in dem die LED angeordnet ist, zur Abdichtung mit einem transparenten Klebstoff gefüllt.

Eine gattungsgemäße LED-Flächenleuchte ist zudem aus US 2010/0254121 A1 bekannt.

Es ist Aufgabe der vorliegenden Erfindung, eine gattungsgemäße LED-Flächenleuchte bereitzustellen, bei der eine Verschmutzung der optischen Komponenten und der damit einhergehende Wirkungsgradverlust wirksam und auf einfache Weise unterbunden werden. Die LED-Flächenleuchte soll ferner kostengünstig und leicht herstellbar sein.

Die Aufgabe wird gelöst durch die Merkmale des Anspruchs 1.

Die erfindungsgemäß vorgesehene Dichtung ist einerseits zwischen dem Schichtaufbau und dem Gehäuserahmen angeordnet und umschließt andererseits den Rand des Schichtaufbaus derart, dass auch die am Rand angeordneten LEDs zwischen Rand und Dichtung eingeschlossen sind. Dadurch ist nur eine einzige Dichtung erforderlich, um die Schichten des Schichtaufbaus gegeneinander und den Schichtaufbau gegen den Gehäuserahmen abzudichten, und zwar indem die Außenseite der Dichtung gegen den Gehäuserahmen, und gleichzeitig die Dichtung gegen Ober- und Unterseite des Schichtaufbaus gedrückt wird.

Die Lichtquelle der erfindungsgemäßen Leuchte besteht aus mehreren LEDs, wobei identische oder unterschiedliche LEDs zum Einsatz kommen können. Insbesondere eignen sich sogenannte LED-Streifen, bei denen mehrere LEDs auf einer flexiblen Leiterplatte angeordnet sind. Die LEDs sind vorzugsweise auf zwei gegenüberliegenden Seiten am Rand des Schichtaufbaus angeordnet. Es ist jedoch auch möglich, dass LEDs an nur einer Seite, an drei oder an allen vier Seiten am Rand des Schichtaufbaus angeordnet sind. Beispielsweise können die LEDs auch am Rand des Schichtaufbaus einer runden LED-Flächenleuchte angeordnet sein. Außerdem können die LEDs eine Primäroptik aufweisen.

Im Rahmen der vorliegenden Erfindung wird unter einem Gehäuserahmen sowohl ein einteiliger Gehäuserahmen als auch ein mehrere Teile umfassender Gehäuserahmen verstanden. Im Rahmen der vorliegenden Erfindung kann der Gehäuserahmen den Schichtaufbau ganz oder nur teilweise umgeben. Der Gehäuserahmen umfasst vorzugsweise eine Befestigungsvorrichtung zur Montage der LED-Flächenleuchte, beispielsweise an einer Decke. Der Gehäuserahmen kann beispielsweise auch der Befestigungsrahmen einer abgehängten Decke sein.

Weitere Bestandteile der Leuchte, wie beispielsweise Treiber oder Transformatoren, können am Gehäuserahmen oder insbesondere auch an der Oberseite des Schichtaufbaus befestigt sein.

Die Montage der Leuchte umfasst die folgenden Schritte:
- Anordnen der einzelnen Schichten des optischen Schichtaufbaus übereinander;
- Anordnen der LEDs am Rand des Schichtaufbaus;
- Anbringen der Dichtung, sodass sie die LEDs und den Rand des Schichtaufbaus umgibt und an der Oberseite und an der Unterseite des Schichtaufbaus anliegt;
- Anordnen der Dichtung zusammen mit den LEDs und dem Schichtaufbau am Gehäuserahmen, sodass der Gehäuserahmen an der Dichtung anliegt oder aufliegt;
- Verspannen des Schichtaufbaus gegen den Gehäuserahmen, sodass die Dichtung den Schichtaufbau gegen den Gehäuserahmen abdichtet und die Dichtung gegen die Oberseite und die Unterseite des Schichtaufbaus gepresst wird.

Die Erfindung bietet die Vorteile, dass die Verwendung einer einzigen Dichtung eine kompakte Bauform ermöglicht und die Anzahl der Bauteile für die Montage sowie die Herstellungskosten reduziert werden.

Vorteilhafte Ausgestaltungen der vorliegenden Erfindung sind Gegenstand der Unteransprüche.

In einer bevorzugten Ausführungsform sind die Schichten des Schichtaufbaus lose übereinander angeordnet, insbesondere nicht verklebt oder über eine alternative Stoffschlussmethode miteinander verbunden. Ein Verkleben der einzelnen Schichten zum Schutz des Aufbaus vor Verschmutzung ist durch die Verwendung der erfindungsgemäßen, umschließenden Dichtung nicht nötig. Dies vereinfacht den Herstellungsprozess und bei Beschädigung lassen sich einzelne Schichten austauschen. Außerdem kann der Schichtaufbau an unterschiedliche lichttechnische Aufgaben angepasst werden. Spannungen, die aufgrund unterschiedlicher Wärmeleitungskoeffizienten bei fest verbundenen Schichten entstehen, treten nicht auf.

In einer weiteren bevorzugten Ausführungsform umfasst der Schichtaufbau eine Reflektorplatte, eine Lichtleitschicht und ein Abschlussglas. Das Licht wird seitlich in die Lichtleitschicht eingestrahlt und über die gesamte Fläche der Lichtleitschicht verteilt. Die Reflektorschicht begrenzt den Schichtaufbau auf der Oberseite, das Abschlussglas begrenzt den Schichtaufbau auf der Unterseite in Lichtabstrahlrichtung. Die Lichtleistung der Leuchte wird erhöht, indem das auf die Reflektorplatte auftreffende Licht in Lichtabstrahlrichtung zurückreflektiert wird. Das Abschlussglas streut das Licht diffus, um es möglichst gleichmäßig über die gesamte Fläche abzugeben.

Die einzelnen Schichten des Schichtaufbaus sind vorzugsweise als durchgehende Platten ausgebildet, um dem Aufbau Stabilität zu verleihen, können jedoch alternativ auch aus mehreren Teilstücken bestehen. Insbesondere sind die beiden äußeren Schichten, wie z.B. Reflektorplatte und Abschlussglas vorzugsweise durchgehend ausgebildet.

Die den Schichtaufbau begrenzende, äußere Oberfläche des Abschlussglases ist vorzugsweise eben ausgebildet, kann jedoch alternativ auch gewölbt ausgebildet sein oder andere geometrische Formen aufweisen, um verschiedene lichttechnische Aufgaben zu erfüllen oder um sich dem Design des Leuchtengehäuses anzupassen.

Die den Schichtaufbau begrenzende, äußere Oberfläche der Reflektorplatte weist vorzugsweise Befestigungsvorrichtungen für weitere Bestandteile der LED-Flächenleuchte auf. Dadurch ergibt sich eine modulare Bauweise, da der Schichtaufbau zusammen mit allen nötigen Bestandteilen in verschieden ausgebildete Gehäuserahmen eingesetzt werden kann.

Vorzugsweise besteht das Abschlussglas aus Polymethylmethacrylat (PMMA), Glas oder Polycarbonat (PC) und ist opal oder weiß beschichtet ausgebildet. Die Lichtleitschicht ist vorzugsweise als lichtauskoppelnde Prismenplatte ausgebildet und besteht aus PMMA.

In einer weiteren bevorzugten Ausführungsform umfasst die LED-Flächenleuchte eine Profilleiste, die am Rand des Schichtaufbaus angeordnet ist und auf der die LEDs angeordnet sind. Dies ermöglicht eine einfache und präzise Positionierung mehrerer LEDs, insbesondere eines LED-Streifens am Rand des Schichtaufbaus, und bietet zusätzlichen Schutz vor Beschädigung.

Vorzugsweise besteht die Profilleiste aus einem Material mit hoher Wärmeleitfähigkeit wie beispielsweise Aluminium, um die beim Betrieb der LEDs erzeugte Wärme effektiv abzuleiten.

In einer besonders bevorzugten Ausführungsform ist die Profilleiste mit zumindest einer Schicht des Schichtaufbaus fest verbunden. Dadurch wird die Herstellung vereinfacht und der Abstand zwischen LED und Schichtaufbau kann präzise bestimmt werden. Alternativ ist es auch möglich, dass die Profilleiste mit der Schicht einteilig ausgebildet ist.

In einer weiteren besonders bevorzugten Ausführungsform ist die Profilleiste mit zumindest einer Schicht des Schichtaufbaus verschraubt oder mit Haltefedern gesichert. Durch Einsatz der Haltefedern oder Verschrauben ergibt sich eine kostengünstige und einfache Herstellung der Leuchte, und die Profilleiste lässt sich gegebenenfalls vom Schichtaufbau trennen, um Bauteile auszutauschen.

In einer weiteren besonders bevorzugten Ausführungsform ist die Profilleiste mit der Reflektorplatte verschraubt. Unabhängig von der Ausbildung des restlichen Schichtaufbaus wird die Reflektorplatte vorzugsweise immer durchgehend ausgebildet sein und eignet sich daher zur Befestigung der Profilleiste unabhängig von der übrigen Ausführung des Schichtaufbaus. Außerdem können durch eine Befestigung an der Reflektorplatte unerwünschte Schatten auf dem Abschlussglas vermieden werden, wie sie z.B. bei einer Befestigung am Abschlussglas oder an der Lichtleitschicht auftreten können.

In einer weiteren bevorzugten Ausführungsform ist an der Profilleiste ein abgewinkelter Schenkel ausgebildet. Über diesen Schenkel ist die Profilleiste am Schichtaufbau befestigt und der Abstand der LED zum Schichtaufbau lässt sich präzise bestimmen. Insbesondere kann die Profilleiste L-förmig oder U-förmig ausgeprägt sein.

In einer weiteren bevorzugten Ausführungsform ist an der Profilleiste zumindest ein erstes Formschlusselement, und an der Dichtung zumindest ein zweites Formschlusselement ausgebildet. Wenn die Profilleiste in die Dichtung eingesetzt ist, wirken das erste Formschlusselement und das zweite Formschlusselement zusammen, so dass die Profilleiste präzise positioniert und ein Verrutschen verhindert wird.

In einer weiteren bevorzugten Ausführungsform ist die Dichtung als einteilige, umlaufende Dichtung ausgebildet, die den gesamten Rand des Schichtaufbaus umschließt. Dadurch ergibt sich eine besonders effektive Dichtwirkung, und die Montage wird durch eine Reduzierung der Bauteile vereinfacht. Die für die Kabelführung gegebenenfalls nötigen Öffnungen in der Dichtung stehen dabei nicht im Widerspruch zur umlaufenden, den gesamten Rand des Schichtaufbaus umschließenden Dichtung.

In einer weiteren Ausführungsform ist der Querschnitt der Dichtung im Wesentlichen U-förmig ausgebildet. Durch die ebenen und großen Auflageflächen ergeben sich eine besonders effektive Dichtwirkung und eine einfache Montage. Die zum Verklemmen der einzelnen Bestandteile nötige Kraft wird bei einer ebenen Auflagefläche besonders gleichmäßig verteilt.

Alternativ sind jedoch auch andere geometrische Formen der Dichtung denkbar, z.B. um die Form der Dichtung an die Auflagefläche des Gehäuserahmens anzupassen.

In einer weiteren bevorzugten Ausführungsform besteht die Dichtung aus einem elastischen Kunststoff. Elastische Kunststoffe lassen sich sehr kostengünstig herstellen, haben eine gute Dichtwirkung und sind widerstandsfähig gegen äußere Einflüsse. Eine solche Dichtung lässt sich zur Montage besonders leicht über den Schichtaufbau und die LEDs stülpen. Dies ist besonders vorteilhaft bei einer einteiligen, den gesamten Rand des Schichtaufbaus umschließenden Dichtung.

In einer weiteren bevorzugten Ausführungsform umfasst die LED-Flächenleuchte einen Deckel, der an der Dichtung anliegt, wobei die Dichtung und der Schichtaufbau zwischen dem Deckel und dem Gehäuserahmen angeordnet sind. Der Deckel dient dabei zum Verklemmen des Schichtaufbaus gegen den Gehäuserahmen und bewirkt somit die Dichtwirkung gegenüber dem Schichtaufbau und dem Gehäuserahmen. Der Deckel kann dabei einteilig ausgebildet sein oder aus mehreren Teilen bestehen.

Vorzugsweise liegt der Deckel in einem den gesamten Rand umlaufenden Bereich auf der Seite der Reflektorplatte an der Dichtung an, so dass zwischen Reflektorplatte und Deckel ein Hohlraum entsteht, der ebenfalls abgedichtet ist. In diesem Hohlraum können weitere für den Betrieb der Lampe nötige Bauteile wie z.B. Treiber oder Transformatoren angeordnet werden.

In einer besonders bevorzugten Ausführungsform ist der Deckel mittels Schrauben gegen den Gehäuserahmen verklemmt. Dadurch ergibt sich eine besonders einfache Montage.

Vorteilhafte Ausführungsbeispiele der vorliegenden Erfindung werden im Folgenden anhand von Zeichnungen näher erläutert. Es zeigen:
- Fig. 1: eine schematische Darstellung einer erfindungsgemäßen LED-Flächenleuchte im Querschnitt, und
- Fig. 2: eine schematische Explosionszeichnung einer erfindungsgemäßen LED-Flächenleuchte in Perspektive.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht näher eingegangen wird, so wird auf vorangegangene oder nachfolgende Figurenbeschreibungen Bezug genommen.

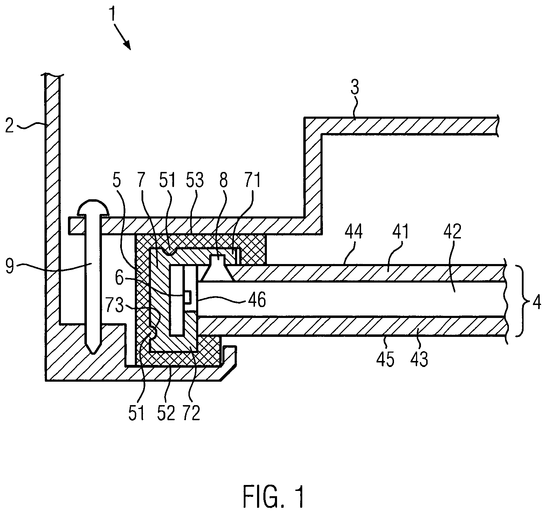

Die in Fig. 1 dargstellte erfindungsgemäße LED-Flächenleuchte 1 umfasst einen Gehäuserahmen 2, einen Deckel 3 sowie einen dazwischen angeordneten optischen Schichtaufbau 4. Der Rand 46 des Schichtaufbaus 4 und am Rand 46 angeordnete LEDs 6 in Form eines LED-Streifens werden von einer Dichtung 5 umschlossen. Der LED-Streifen 6 ist auf einer Profilleiste 7 angebracht. Der Schichtaufbau 4 weist eine durchgehende Reflektorplatte 41, eine Lichtleitschicht 42 sowie ein Abschlussglas 43 auf. Die Lichtleitschicht 42 ist zwischen der Reflektorplatte 41 und dem Abschlussglas 43 angeordnet. Ein abgewinkelter Schenkel 71 der Profilleiste 7 ist über Schrauben 8 mit der Reflektorplatte 41 verschraubt. Die Profilleiste 7 weist außerdem einen zweiten Schenkel 72 auf, so dass ein U-förmiger Bereich entsteht, in den der LED-Streifen 6 eingesetzt ist.

Die Dichtung 5 ist U-förmig und umgreift den Rand 46 des Schichtaufbaus 4. Sie steht mit der Oberseite 44 der Reflektorplatte 41 und der Unterseite 45 des Abschlussglases 43 in Kontakt. Die Profilleiste 7 weist zwei in Längsrichtung verlaufende Nuten 73 auf, in die die Dichtung 5 mit zwei Ausformungen 51 eingreift. Die Dichtung 51 liegt mit ihrer Unterseite 52 an dem Gehäuserahmen 2 und mit der Oberseite 53 am Deckel 3 an. Der Deckel 3 ist über Schrauben 9 gegen den Gehäuserahmen 2 verspannt, so dass die Dichtung 5 den Schichtaufbau 4 gegen den Gehäuserahmen 2 abdichtet, und die Dichtung 5 gegen die Oberseite 44 der Reflektorplatte 41 und die Unterseite 45 des Abschlussglases 43 gepresst wird. Zwischen der Oberseite 44 der Reflektorplatte 41 und dem Deckel 3 besteht ein Bereich, in dem weitere nicht dargestellte Bauteile der Leuchte angeordnet sind, wie beispielsweise Treiber oder Transformatoren. Diese können beispielsweise an der Unterseite des Deckels 6 oder an der Oberseite 44 der Reflektorplatte 41 befestigt sein.

Das Licht der LEDs 6 wird seitlich in den Rand 46 der Lichtleitschicht 42 eingestrahlt. Die Lichtleitschicht 42 ist eine lichtauskoppelnde Prismenplatte aus PMMA. Das Licht wird daher über die gesamte Schicht verteilt und über die gesamte Fläche nach oben und unten gelenkt. Die Reflektorplatte 41 ist als Reflektorblech ausgebildet und reflektiert den nach oben gelenkten Lichtanteil zurück in Richtung des Abschlussglases 43. Das Abschlussglas 43 besteht aus Glas und ist opal ausgebildet. Es streut das aus der Lichtleitschicht 42 eintretende Licht diffus und vermischt es, sodass Licht möglichst gleichmäßig über die gesamte Fläche des Abschlussglases 43 abgegeben wird. Im dargestellten Ausführungsbeispiel weist das Abschlussglas 43 eine ebene Unterseite 45 auf.

Die LED-Flächenleuchte 1 wird mit dem Gehäuserahmen 2 an einer Wand, Decke oder Ähnlichem befestigt. Erfindungsgemäß ist die Dichtung 5 einteilig ausgeführt und umgreift den gesamten Rand 46 des Schichtaufbaus 4. Außerdem umgibt der Gehäuserahmen 2 den Schichtaufbau 4 und den Deckel 3, wobei beide einteilig ausgebildet sind. Die gesamte Unterseite 52 der Dichtung 5 steht mit dem Gehäuserahmen 2 in Kontakt. Die gesamte Oberseite 53 der Dichtung 5 steht mit dem Deckel 3 in Kontakt, so dass der Bereich zur Aufnahme von weiteren Bauteilen zwischen Schichtaufbau 4 und Deckel 3 ebenfalls abgedichtet ist.

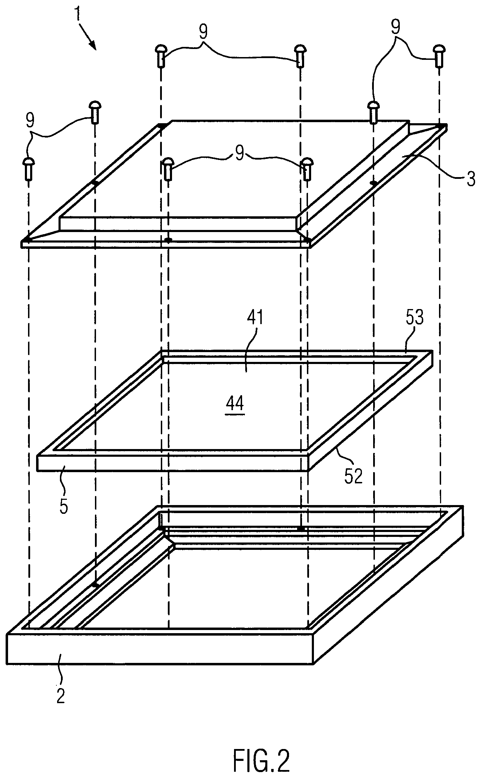

Zur Montage der dargestellten Leuchte 1 wird zunächst der LED-Streifen 6 mit der Profilleiste verschraubt. Im zweiten Schritt wird die Profilleiste 7 mit der Reflektorplatte 41 verschraubt oder mittels Haltefedern an dieser gesichert. Anschließend werden Reflektorplatte 41, Lichtleitschicht 42 und Abschlussglas 43 lose übereinander angeordnet und die Dichtung 5 über den Rand 46 des Schichtaufbaus 4 und die Profilleiste 7 gestülpt. Wie in Fig. 2 dargestellt, wird nun die Dichtung 5 samt Profilleiste 7 und Schichtaufbau 4 in den Gehäuserahmen 2 eingesetzt. Nachdem gegebenenfalls vorhandene weitere Bauteile auf der Oberseite 44 der Reflektorplatte 41 oder im Deckel 3 befestigt worden sind, wird der Deckel 3 auf die Oberseite 53 der Dichtung 5 aufgelegt und über Schrauben 9 gegen den Gehäuserahmen 2 verspannt.

## Patentansprüche

1. LED-Flächenleuchte (1), umfassend einen optischen Schichtaufbau (4), wobei der Schichtaufbau (4) eine Oberseite (44), eine Unterseite (45) und einen Rand (46) umfasst und aus zumindest zwei übereinander angeordneten, im Wesentlichen plattenförmigen Schichten besteht, wobei die LED-Flächenleuchte (1) des Weiteren LEDs (6) als Lichtquelle umfasst, wobei die LEDs (6) am Rand (46) des Schichtaufbaus (4) angeordnet sind und Licht seitlich in den Schichtaufbau (4) einstrahlen, wobei die LED-Flächenleuchte (1) des Weiteren einen Gehäuserahmen (2) umfasst, **dadurch gekennzeichnet, dass** die LED-Flächenleuchte (1) des Weiteren eine Dichtung (5) umfasst, die die LEDs (6) und den Rand (46) des Schichtaufbaus (4) umschließt, wobei die Dichtung (5) mit der Oberseite (44) und der Unterseite (45) des Schichtaufbaus (4) in Kontakt steht, und wobei die Dichtung (5) an dem Gehäuserahmen (2) anliegt oder aufliegt, sodass die Dichtung (5) den Schichtaufbau (4) gegen den Gehäuserahmen (2) abdichtet, wobei Gehäuserahmen (2) und Schichtaufbau (4) so gegeneinander verspannt sind, dass die Dichtung (5) gegen die Oberseite (44) und die Unterseite (45) des Schichtaufbaus (4) gepresst ist.

2. LED-Flächenleuchte (1) nach Anspruch 1, wobei die Schichten des Schichtaufbaus (4) lose übereinander angeordnet sind, insbesondere nicht verklebt oder über eine alternative Stoffschlussmethode miteinander verbunden sind.

3. LED-Flächenleuchte (1) nach einem der Ansprüche 1 oder 2, wobei der Schichtaufbau (4) eine Reflektorplatte (41), eine Lichtleitschicht (42) und ein Abschlussglas (43) umfasst.

4. LED-Flächenleuchte (1) nach einem der Ansprüche 1 bis 3, wobei die LED-Flächenleuchte (1) eine am Rand (46) des Schichtaufbaus (4) angeordnete Profilleiste (7) umfasst, auf der die LEDs (6) angeordnet sind.

5. LED-Flächenleuchte (1) nach Anspruch 4, wobei die Profilleiste (7) mit zumindest einer Schicht des Schichtaufbaus (4) fest verbunden ist.

6. LED-Flächenleuchte (1) nach Anspruch 5, wobei die Profilleiste (7) mit zumindest einer Schicht des Schichtaufbaus (4) verschraubt ist.

7. LED-Flächenleuchte (1) nach Anspruch 6, wobei die Profilleiste (7) mit der Reflektorplatte (41) verschraubt ist.

8. LED-Flächenleuchte (1) nach einem der Ansprüche 4 bis 7, wobei an der Profilleiste (7) ein abgewinkelter Schenkel (71) ausgebildet ist.

9. LED-Flächenleuchte (1) nach einem der Ansprüche 4 bis 8, wobei an der Profilleiste (7) zumindest ein erstes Formschlusselement (73) ausgebildet ist, an der Dichtung (5) zumindest ein zweites Formschlusselement (51) ausgebildet ist und das erste Formschlusselement (73) mit dem zweiten Formschlusselement (51) zusammenwirkt.

10. LED-Flächenleuchte (1) nach einem der Ansprüche 1 bis 9, wobei die Dichtung (5) als einteilige, umlaufende Dichtung (5) ausgebildet ist, die den gesamten Rand (46) des Schichtaufbaus (4) umschließt.

11. LED-Flächenleuchte (1) nach einem der Ansprüche 1 bis 10, wobei der Querschnitt der Dichtung (5) im Wesentlichen U-förmig ausgebildet ist.

12. LED-Flächenleuchte (1) nach einem der Ansprüche 1 bis 11, wobei die Dichtung (5) aus einem elastischen Kunststoff besteht.

13. LED-Flächenleuchte (1) nach einem der Ansprüche 1 bis 12, wobei die LED-Flächenleuchte (1) einen Deckel (3) umfasst, der an der Dichtung (5) anliegt, wobei die Dichtung (5) und der Schichtaufbau (4) zwischen dem Deckel (3) und dem Gehäuserahmen (2) angeordnet sind.

14. LED-Flächenleuchte (1) nach Anspruch 13, wobei der Deckel (3) über Schrauben (9) gegen den Gehäuserahmen (2) verklemmt ist.

## Claims

1. LED panel light (1), comprising an optical layer structure (4), the layer structure (4) including a top side (44), a bottom side (45) and an edge (46) and consisting of at least two substantially plate-shaped layers arranged on top of one another, the LED panel light (1) further comprising LEDs (6) as light source, the LEDs (6) being arranged at the edge (46) of the layer structure (4) and radiating light into the layer structure (4) at the side, the LED panel light (1) further comprising a housing frame (2), **characterized in that** the LED panel light (1) further comprises a seal (5) enclosing the LEDs (6) and the edge (46) of the layer structure (4), the seal (5) being in contact with the top side (44) and the bottom side (45) of the layer structure (4), the seal (5) resting against or on the housing frame (2) so that the seal (5) seals the layer structure (4) against the housing frame (2), the housing frame (2) and the layer structure (4) being clamped relative to one another such that the seal (5) is pressed against the top side (44) and the bottom side (45) of the layer structure (4).

2. LED panel light (1) according to claim 1, wherein the layers of the layer structure (4) are arranged loosely on top of one another, in particular are not glued to one another or connected to one another using an alternative form of material bond.

3. LED panel light (1) according to one of claims 1 or 2, wherein the layer structure (4) comprises a reflector plate (41), a light guiding layer (42) and a cover glass (43).

4. LED panel light (1) according to one of claims 1 to 3, wherein the LED panel light (1) comprises a profile strip (7) which is arranged at the edge (46) of the layer structure (4) and on which the LEDs (6) are arranged.

5. LED panel light (1) according to claim 4, wherein the profile strip (7) is permanently connected to at least one layer of the layer structure (4).

6. LED panel light (1) according to claim 5, wherein the profile strip (7) is screwed to at least one layer of the layer structure (4).

7. LED panel light (1) according to claim 6, wherein the profile strip (7) is screwed to the reflector plate (41).

8. LED panel light (1) according to one of claims 4 to 7, wherein an angled leg (71) is formed on the profile strip (7).

9. LED panel light (1) according to one of claims 4 to 8, wherein at least one first interlocking member (73) is formed on the profile strip (7), at least one second interlocking member (51) is formed on the seal (5), and the first interlocking member (73) interacts with the second interlocking member (51).

10. LED panel light (1) according to one of claims 1 to 9, wherein the seal (5) is configured as an one-piece, circumferential seal (5) which encloses the entire edge (46) of the layer structure (4).

11. LED panel light (1) according to one of claims 1 to 10, wherein the cross-section of the seal (5) is substantially U-shaped.

12. LED panel light (1) according to one of claims 1 to 11, wherein the seal (5) is made of an elastic plastic material.

13. LED panel light (1) according to one of claims 1 to 12, wherein the LED panel light (1) comprises a lid (3) resting against the seal (5), the seal (5) and the layer structure (4) being arranged between the lid (3) and the housing frame (2).

14. LED panel light (1) according to claim 13, wherein the lid (3) is clamped relative to the housing frame (2) by means of screws (9).

## Revendications

1. Luminaire mince à LED (1) comprenant un module optique à structure stratifiée en couches (4), le module à structure stratifiée en couche (4) présentant un côté supérieur (44), un côté inférieur (45) et un bord (46) et étant constitué d'au moins deux couches sensiblement en forme de plaque et agencées de manière superposée, le luminaire mince à LED (1) comprenant en outre des LED (6) en guise de source lumineuse, les LED (6) étant agencées au niveau du bord (46) du module à structure stratifiée en couches (4) et envoyant la lumière latéralement dans le module à structure stratifiée en couches (4), et le luminaire mince à LED (1) comprenant, en outre, un cadre de boitier (2),
**caractérisé en ce que** le luminaire mince à LED (1) comprend, par ailleurs, un joint d'étanchéité (5), qui entoure les LED (6) et le bord (46) du module à structure stratifiée en couches (4), le joint d'étanchéité (5) étant en contact avec le côté supérieur (44) et le côté inférieur (45) du module à structure stratifiée en couches (4), et **en ce que** le joint d'étanchéité (5) s'appuie ou repose contre le cadre de boitier (2) de sorte que le joint d'étanchéité (5) rend étanche le module à structure stratifiée en couches (4) par rapport au cadre de boitier (2), et le cadre de boitier (2) et le module à structure stratifiée en couches (4) étant serrés l'un contre l'autre de manière telle que le joint d'étanchéité (5) soit pressé contre le côté supérieur (44) et le côté inférieur (45) du module à structure stratifiée en couches (4).

2. Luminaire mince à LED (1) selon la revendication 1, dans lequel les couches du module à structure stratifiée en couches (4) sont agencées librement les unes au-dessus des autres, et ne sont notamment pas collées ou reliées mutuellement par une autre méthode à continuité de matière.

3. Luminaire mince à LED (1) selon l'une des revendications 1 ou 2, dans lequel le module à structure stratifiée en couches (4) comprend une plaque de réflecteur (41), une couche formant guide d'onde lumineuse (42) et une vitre ou un verre de couverture (43).

4. Luminaire mince à LED (1) selon l'une des revendications 1 à 3, le luminaire mince à LED (1) comprenant une barrette profilée (7) agencé sur le bord (46) du module à structure stratifiée en couches (4) et sur laquelle sont placées les LED (6).

5. Luminaire mince à LED (1) selon la revendication 4, dans lequel la barrette profilée (7) est reliée de manière fixe à au moins une couche du module à structure stratifiée en couches (4).

6. Luminaire mince à LED (1) selon la revendication 5, dans lequel la barrette profilée (7) est vissée à au moins une couche du module à structure stratifiée en couches (4).

7. Luminaire mince à LED (1) selon la revendication 6, dans lequel la barrette profilée (7) est vissée à la plaque de réflecteur (41).

8. Luminaire mince à LED (1) selon l'une des revendications 4 à 7, dans lequel sur la barrette profilée (7) est formée une aile coudée (71).

9. Luminaire mince à LED (1) selon l'une des revendications 4 à 8, dans lequel la barrette profilée (7) forme au moins un premier élément de liaison par complémentarité de formes (73), sur le joint d'étanchéité (5) est formé au moins un deuxième élément de liaison par complémentarité de formes (51), et le premier élément de complémentarité de formes (73) coopère avec le deuxième élément de complémentarité de formes (51).

10. Luminaire mince à LED (1) selon l'une des revendications 1 à 9, dans lequel le joint d'étanchéité (5) se présente sous la forme d'un joint d'étanchéité périphérique (5) d'un seul tenant, qui entoure la totalité du bord (46) du module à structure stratifiée en couches (4).

11. Luminaire mince à LED (1) selon l'une des revendications 1 à 10, dans lequel la section transversale du joint d'étanchéité (5) est sensiblement d'une configuration en forme de U.

12. Luminaire mince à LED (1) selon l'une des revendications 1 à 11, dans lequel le joint d'étanchéité (5) est réalisé en une matière plastique élastique.

13. Luminaire mince à LED (1) selon l'une des revendications 1 à 12, le luminaire mince à LED (1) comprenant un couvercle (3) qui s'appuie sur le joint d'étanchéité (5), le joint d'étanchéité (5) et le module à structure stratifiée en couches (4) étant agencés entre le couvercle (3) est le cadre de boitier (2).

14. Luminaire mince à LED (1) selon la revendication 13, dans lequel le couvercle (3) est serré contre le cadre de boitier (2) par l'intermédiaire de vis (9).
